# EUROPEAN PATENT SPECIFICATION

(11) **EP 4 137 531 B1**
(45) Date of publication and mention of the grant of the patent: **06.11.2024**
(21) Application number: 21788975.7
(22) Date of filing: 09.06.2021
(51) Int. Cl.: C08J 3/12, C08B 15/02, C08B 15/08, C08L 1/04, D21C 3/04, A23L 33/24

(54) **ULTRA-FINE HIGH-PERFORMANCE MICROCRYSTALLINE CELLULOSE PRODUCT AND PREPARATION METHOD THEREFOR**
ULTRAFEINES HOCHLEISTUNGSFÄHIGES MIKROKRISTALLINES CELLULOSEPRODUKT UND HERSTELLUNGSVERFAHREN DAFÜR
PRODUIT ULTRA-FIN À BASE DE CELLULOSE MICROCRISTALLINE HAUTES PERFORMANCES ET SON PROCÉDÉ DE PRÉPARATION

(30) Priority: 13.04.2020 CN 202010284261
(43) Date of publication of application: 22.02.2023
(73) Proprietor: Mudanjiang Linrun Pharma Excipients LLC., Heilongjiang 157013 (CN)
(72) Inventor: YIN, Limin, Mudanjiang, Heilongjiang 157013 (CN)
(74) Representative: Danubia Patent & Law Office LLC
(86) International application number: PCT/CN2021/099143
(87) International publication number: WO 2021/209075

(56) References cited:
- EP-A1- 3 622 966
- WO-A1-2020/058252
- CN-A- 101 481 424
- CN-A- 103 526 624
- CN-A- 110 229 239
- CN-A- 111 333 875
- US-A- 5 976 600
- ISHIKAWA TATSUYA ET AL: "Preparation of rapidly disintegrating tablet using new types of microcrystalline cellulose (PH-M series) and low substituted-hydroxypropylcellulose or spherical sugar granules by direct compression method", CHEMICAL AND PHARMACEUTICAL BULLETIN, PHARMACEUTICAL SOCIETY OF JAPAN, JP, vol. 49, no. 2, 1 February 2001 (2001-02-01), pages 134 - 139, XP002442998, ISSN: 0009-2363, DOI: 10.1248/CPB.49.134

## Description

### TECHNICAL FIELD

The invention relates to the field of microcrystalline cellulose, in particular to a preparation method of an ultra-fine and high-performance microcrystalline cellulose product.

### BACKGROUND OF THE INVENTION

Microcrystalline cellulose is a free-flowing fine powder made by hydrolyzing natural cellulose to the levelling off degree of polymerization (LODP) in dilute acid. It is white or near-white, odorless and tasteless. Its levelling off degree of polymerization (LODP) is usually 100-350. It is not dissolved in water, dilute acid, organic solvent or grease. Partial dissolution and swelling are carried out in a dilute alkali solution. The microcrystalline cellulose is stable in property under the condition of high temperature, high humidity and strong light irradiation, and is widely applied to various industries such as medicine, food, daily chemicals and light industry.

Microcrystalline cellulose serves as a medicinal auxiliary material and is widely applied to the medical industry. It is mainly used as an adhesive, a disintegrating agent or a filler in the pharmaceutical industry, and is mainly used in a tabletting process. It can be used for wet granulation, dry granulation or direct tabletting. It is good in pressure resistance and plays a role in disintegration and lubrication. It is an important medicinal auxiliary material. Microcrystalline cellulose can also play a slow release effect on medicine because of its unique porous structure. Microcrystalline cellulose can be used as dietary fiber which is an important functional food base material in the food industry. It is an ideal food additive and can be used as a substitute for fat.

There are many types of microcrystalline cellulose products on the market, such as PH 101 (average particle size of 40-60 µm, loose density of 0.26-0.32 g/mL), PH 102 (average particle size of 70-100 µm, loose density of 0.28-0.33 g/mL), PH 103 (average particle size of 45-75 µm, loose density of 0.26-0.34 g/mL) and PH 112 (average particle size of 90-140 µm, loose density of 0.28-0.37 g/mL). There are also special types of microcrystalline cellulose products with a higher density or a small particle size, such as PH 301 (the average particle size is 40-60 µm, the loose density is 0.34-0. 45 g/ml), PH 302 (the average particle size is 90-140 um, the loose density is 0.35-0.50 g/ml) and PH 105 (the average particle size is 20-40 µm, the loose density is 0.2-0.3 g/mL).

The following table is cited as an ASAHI product manual from Japan, and is a product parameter marked on the packaging of common microcrystalline cellulose products on the market:

| product code | average particle size (um) | loose density (g/cm³) | loss on drying (%) | angle of repose (degree) | packing net weight (kg) |
|---|---|---|---|---|---|
| PH-101 | 50 | 0.29 | 2.0-6.0 | 45 | 20 |
| PH-102 | 90 | 0.30 | 2.0-6.0 | 42 | 20 |
| PH-200 | 170 | 0.35 | 2.0-6.0 | 36 | 20 |
| PH-301 | 50 | 0.41 | 2.0-6.0 | 41 | 25 |
| PH-302 | 90 | 0.43 | 2.0-6.0 | 38 | 25 |
| PH-F20JP | 20 | 0.23 | below 7.0 | greater than 60 | 20 |
| KG-802 | 50 | 0.21 | 2.0-6.0 | 49 | 15 |
| KG-1000 | 50 | 0.12 | 2.0-6.0 | 57 | 10 |
| UF-711 | 50 | 0.22 | 2.0-6.0 | 42 | 15 |
| UF-702 | 90 | 0.29 | 2.0-6.0 | 34 | 20 |

Microcrystalline cellulose products with different particle sizes or densities have different application properties. Generally speaking, the smaller the particle size of microcrystalline cellulose, the more favorable it is to mix evenly with other ingredients such as medicines, which is suitable for it to mix with materials with small particle size or low active ingredient content to improve the content uniformity. The traditional microcrystalline cellulose with small particle size has also a unique advantage that the smaller the particle size is, the higher the strength performance of the tablet is. However, the smaller the particle size of microcrystalline cellulose is, the smaller the fluidity tends to be, which is not conducive to the process of direct compression and other preparations, and greatly limits its application in medicine and food.

Small particle size microcrystalline cellulose products are traditionally produced by dry powder grinding, sieving or ball milling, especially in the presence of grinding aids. Chinese invention patent CN101481424B discloses that microcrystalline cellulose is degraded with ⁶⁰Co-γ irradiation and ultrafinely treated, and then mechanically pulverized or/and chemically degraded to obtain ultra-fine crystalline cellulose with a particle size less than 10 µm. However, the density of the microcrystalline cellulose products produced by these methods did not increase significantly. Commercially available microcrystalline cellulose products with small particle size generally have an average particle size D50 of about 15-30µm and a loose density of 0.2-0.3g/ml. Therefore, there is a problem that the smaller the particle size, the poorer the fluidity of the product. It greatly limits its application in industry.

Chinese invention patent CN109666078A discloses a method for preparing microcrystalline cellulose by acid hydrolysis after high shear mechanical pretreatment. During the pretreatment process, the high shear mechanical force cuts the fibers, which improves the accessibility of the acid solution to the cellulose, increases the speed at which the acid solution penetrates into the cellulose, increases the acid hydrolysis rate of the acid solution to the cellulose amorphous region and reduces chemical usage or reaction time. The density of the microcrystalline cellulose prepared by this method is not improved, and the average particle size of the microcrystalline cellulose product is still above 38.7 µm.

Chinese invention patent CN110229239A discloses microcrystalline celluloses with high loose density and their production process. The filter cake obtained by acid hydrolysis is kneaded by a kneader and spray-dried to obtain a microcrystalline cellulose product with a loose density of 0.6-0.65g/cm³. However, the particle size of the microcrystalline cellulose product is also larger and the average particle size D50 reaches 45-50µm.

Chinese invention patents CN103726378A, CN103526624A and CN1671743A also disclose methods for preparing microcrystalline cellulose. However, the particle size or the loose density of the microcrystalline cellulose products prepared by these methods is not within the scope of the present invention. For example, the particle size is above 25 µm, or the loose density is much lower than 0.5 g/ml.

US patent application US5976600A discloses microcrystalline cellulose having a mean particle size of 20-30 µm and a loose bulk density of 0.50-0.65 g/ml. The method for preparing microcrystalline cellulose involves aggregating smaller particles.

### SUMMARY OF THE INVENTION

In order to overcome the defects of microcrystalline cellulose products of the prior art, the present invention provides a manufacturing method for a microcrystalline cellulose product with ultra-fine particle size and extremely high density. The microcrystalline cellulose product has better performance and wider field of application.

The technical scheme of the present invention is as follows:
The present invention provides a manufacturing method for a microcrystalline cellulose particle, which is characterized in that the average particle size D50 of the microcrystalline cellulose particle is 1-25 µm and the loose density is 0.50-0.80 g/ml. Preferably, the average particle size D50 of the microcrystalline cellulose particle is 1-25 µm and the loose density is 0.52-0.75 g/ml. More preferably, the average particle size D50 of the microcrystalline cellulose particles is 10-20 µm and the loose density is 0.55-0.75 g/ml.

The above-mentioned microcrystalline cellulose particles are obtained from ordinary microcrystalline cellulose by high shear mechanical action, and the solid content of ordinary microcrystalline cellulose is 15%-60% in the high shear mechanical action. Preferably, the solid content of ordinary microcrystalline cellulose is 30%-50% in the high shear mechanical action.

The said high shear machine action is to use a high shear force equipment with a torque greater than 50 N·m. The said high shear force equipment is a screw extrusion equipment with high strength and high shear force, such as a screw extruder, a screw kneader or a screw extrusion kneader and the like. The said high shear force equipment can be continuous or intermittent, and can also be divided into multiple stages, multiple times or repeated processing.

The ordinary microcrystalline cellulose mentioned above refers to the microcrystalline cellulose product whose average particle size D50 and/or loose density is different from those of the present invention. Its average particle size D50 exceeds 25 µm and/or loose density below 0.50 g/ml. For example, microcrystalline cellulose products prepared by the raw materials for preparing microcrystalline cellulose in the prior art through conventional methods in the art, or microcrystalline cellulose filter cake or semi-finished product prepared from natural cellulose pulp which is subjected to conventional hydrolysis methods or electron beam irradiation methods, or existing commercially available microcrystalline cellulose products. As an example of the said conventional hydrolysis methods, the cellulose pulp is acid hydrolyzed at a temperature of 110-170°C and an acid concentration of 0.03-0.35mol/L to obtain the filter cake by washing and filtering. As an example of the said electron beam irradiation methods, microcrystalline cellulose is produced by electron beam irradiation with the radiation dose of 0.2Mrad-10Mrad. The raw materials of the natural cellulose pulp is not particularly limited and can be materials commonly used in the art for producing microcrystalline cellulose, which includes but is not limited to the following raw materials or pulps: wood pulp, hemp pulp, bamboo pulp, cotton, cotton linter, straw, reed, straw pulp, cane bagasse, algae, bacterial microorganisms, etc. The said existing commercially available microcrystalline cellulose products include but are not limited to microcrystalline cellulose products with code names such as PH101, PH102, PH112, PH301, PH302, PH105 or PH103.

Wherein the above-mentioned method, the microcrystalline cellulose particles are obtained from the material processed by the high shear force equipment, which further optionally includes the steps of dilution, dispersion, drying, sieving and/or fine grinding.

As another object of the present disclosure, uses of the above-mentioned microcrystalline cellulose particles as an adjuvant or carrier in pharmaceuticals, health products, food, industry, light industry, daily chemicals, petroleum, personal care, agricultural chemistry and other industries are provided.

The said particles in the microcrystalline cellulose particles prepared by the present invention can also be understood as powder and the like. They refer to microcrystalline cellulose products with the granular or powdery particles having an average particle size D50 of 1-25 µm and a loose density of 0.50-0.80 g/ml.

The high shear force device or equipment used in the present invention can reduce the particle size of the particles through extremely high shear force and mechanical action such as pressure or friction. Different from the traditional manufacturing method of fine microcrystalline cellulose, the present invention does not use solid grinding aids, nor does it use water-soluble grinding aids such as salts during the high shearing process.

The high shear force device or equipment of the present invention can be a continuous or intermittent device, and can also be divided into multiple repeated processes. In general, if a screw device such as an extruder or a kneader is used, its torque should be more than 20 N·m. The torque is more than 50 N·m and controlled among 50-150 N·m in the examples of the present invention. In the actual extrusion operation, the torque is variable. It is low at the beginning and will increase later. For example, it is about 50 N·m at the beginning and reaches more than 100 N·m later. The microcrystalline cellulose products prepared by this method can reach the particle size and the density described in the present invention.

In the high shear mechanical processing used in the present invention, the solid content of the material is generally 15%-60%, preferably 30%-50%. If the material to be processed is a hydrolyzed microcrystalline cellulose filter cake and the solid content is too high, an appropriate amount of water can be added before or during processing until it reaches a suitable solid content. If the solid content is too low, the material can be dehydrated before or during the high shear processing. The dehydration method can be centrifugation, filtration, pressing, infrared radiation, hot blowing, air blowing or a combination thereof. It can also be obtained by adding dry powder of microcrystalline cellulose or high solid content of hydrolyzed microcrystalline cellulose filter cake to make a suitable solid content of the final mixture. If the material to be processed is an existing microcrystalline cellulose powder, an appropriate amount of water can be added before or during processing until a suitable solid content is achieved. The solid microcrystalline cellulose powder can be factory-made microcrystalline cellulose powder or existing products on the market, such as but not limited to PH101, PH102, PH112, PH301, PH302, PH105, PH103, etc.

Different from traditional methods such as grinding to prepare microcrystalline cellulose products, the method of the present invention significantly increases the density of microcrystalline cellulose while reducing the particle size by controlling the mechanical action of high shear force, so as to obtain high-performance microcrystalline cellulose products with small particle size and high density.

In the present invention, the material processed by the high shear device can be further diluted and dispersed according to an appropriate amount of water, and the general solid content during the dispersion process can be controlled at 1%-25%. The dispersing device used includes, but is not limited to, any high shear dispersing device, such as high shear mixers, homogenizers, homogenizer pumps and the like.

The diluted and dispersed materials can be further dried by spray drying, fluidized bed drying, airflow drying, flash drying and the like. According to needs, the dried material can be further screened or finely ground.

In the present invention, if cellulose raw material or cellulose pulp is used to prepare hydrolyzed microcrystalline cellulose filter cake, any pulp and source of cellulose raw material can be applied. These raw materials or pulps include but are not limited to wood pulp, hemp pulp, bamboo pulp, cotton, cotton staple cashmere, straw, reed, straw pulp, cane bagasse, algae, bacterial microorganisms, etc.

The ultra-fine and high-density microcrystalline cellulose product manufactured by the present invention can be applied to any known application field of microcrystalline cellulose, and can also be applied to any potential or emerging application field, including pharmaceuticals, health products, food, industry, light industry, daily chemical, petroleum, personal care, agricultural chemical and other industries. In the pharmaceutical field, its applications can be, but not limited to, binders, disintegrants, excipients, taste-masking agents, dispersants, adsorbents and the like. The products of the present invention can be used in any formulation process, including but not limited to wet granulation, dry granulation, direct compression, extrusion spheronization, spray drying, pellets, microtablets, coatings, liquid formulations , creams, injections, sprays and more. Medicinal applications also include traditional Chinese medicine and the like. The fine microcrystalline cellulose powder prepared by the present invention is also widely used in the food field. For example, it can be applied to various dairy products such as milk beverages, solid beverages, coffee and tea beverages, carbonated beverages, meat products, jams, condiments, soups, frozen foods, yogurt, fermented milk, cheese, biscuits and the like. In addition to these traditional food applications, the ultra-fine microcrystalline cellulose prepared by the present invention can also be applied in some new fields. For example, ultra-fine microcrystalline cellulose can be used as a carrier of flavor substances, pigments or other nutrients due to its unique and delicate taste and taste-masking or taste-regulating functions, especially in compressed candies. Its superior functions and fluidity greatly improve the quality and performance of compressed candies. It can also reduce or replace the use of sugar alcohols. Still other examples of applications include, but are not limited to, being used as an encapsulating agent or an excipient for active microorganisms in spray drying or tableting.

The microcrystalline cellulose product prepared by the present invention has a small particle size and a high loose density at the same time, which enhances the fluidity, compressibility and other properties of the product, so that it has a wider field of application. Especially, the microcrystalline cellulose product prepared by the present invention has a unique particle shape which is spherical or quasi-spherical particles. The existing microcrystalline cellulose products on the market are all fibrous products in sections and there are no spherical particles. Furthermore, the angle of repose of the microcrystalline cellulose prepared by the present invention is also smaller than that of UF-702 which is the microcrystalline cellulose product with the smallest angle of repose currently on the market. The microcrystalline cellulose product prepared by the present invention not only has the properties of good fluidity and strong compressibility which is very suitable for the tableting process, but also has a small particle size and a spherical or nearly spherical shape which endows the product with good taste and fineness as well as masking odor and is suitable for pharmaceutical and food molding.

### BRIEF DESCRIPTION OF THE DRAWINGS

FIG. 1: the particle structure diagram of the product of Example 1 under a 32x optical microscope
FIG. 2: the particle structure diagram of the product of Example 1 under a 63x optical microscope
FIG. 3: the particle structure diagram of AVICEL PH101 product on the market under 32x optical microscope

### DETAILED DESCRIPTION OF THE EMBODIMENTS

The following examples are intended to explain and illustrate the content of the present invention. The content of the examples should not be construed as limiting the protection scope of the present invention.

The particle size, density, angle of repose and microscope measurement said in the present invention are as follows:
1. Particle size distribution: measured by Malvern 2000 laser particle size analyzer.
2. Determination method of loose density: take microcrystalline cellulose powder, add it to a dry 100ml measuring cylinder to the 100ml mark and let the powder sink naturally. Read the powder volume v (ml) when the top is horizontal. All the powder is poured out and weighed in m (g). Loose density = m/v (g/ml).
3. Determination method of tapped density: place the above-mentioned measuring cylinder containing the material for measuring the loose density on the tap, vibrate 500 times, read the volume v (ml), and convert it into density m/v (g/ml).
4. Determination method of angle of repose: use fixed cone method. Inject the microcrystalline cellulose powder into the center of the disc with a fixed diameter through the funnel. The radius of the disc is r. Stop the injection until the material on the hypotenuse of the powder accumulation layer automatically flows out along the edge of the disc. Measure the height h of the cone formed by powder accumulation. The angle of repose θ=arctan(h/r) is calculated.
5. Optical microscope measurement: Take a small amount of microcrystalline cellulose powder on a glass slide, add a small amount of absolute ethanol to make it more evenly dispersed, then place it under a microscope for observation, adjust the appropriate multiple and make the picture clearer by fine-tuning.

In the actual extrusion operation, the torque is a variable. The torque is low at the beginning. For example, the torque is about 50 N·m at the beginning and will increase later, generally reaching 100-150 N·m. The torque will reach the limit of the equipment when it exceeds 150 N·m. The prepared microcrystalline cellulose products can all reach the particle size and the density described in the present invention when the torque reaches more than 100 N·m.

### Example 1

Take the cellulose pulp obtained from wood on the market, undergo high temperature acid hydrolysis (hydrolysis temperature 115-170 °C, acid concentration 0.03-0.35mol/L) for 1-2 hours to obtain hydrolyzed microcrystalline cellulose, filter and wash to pH to 4-5 and increase the solid content of the cake to 40%. The filter cake of this solid content is extruded 3 times through a high shear extrusion device (continuous extruder with high shear blades), and the torque of the extrusion device is controlled between 50-150 N·m. In the interlayer of the extruder, cooling water is introduced for cooling. The extruded material is diluted with water and stirred, neutralized to pH 5-8, and then spray-dried to obtain the microcrystalline cellulose product of the present invention.

Through particle size, density and angle of repose measurement, the microcrystalline cellulose particle product obtained above has a loose density of 0.670g/ml and a tapped density of 0.807g/ml. Its particle size distribution is D10 of 8.721µm, D50 of 19.776 µm and D90 of 48.369 µm. Its angle of repose is 27.8°.

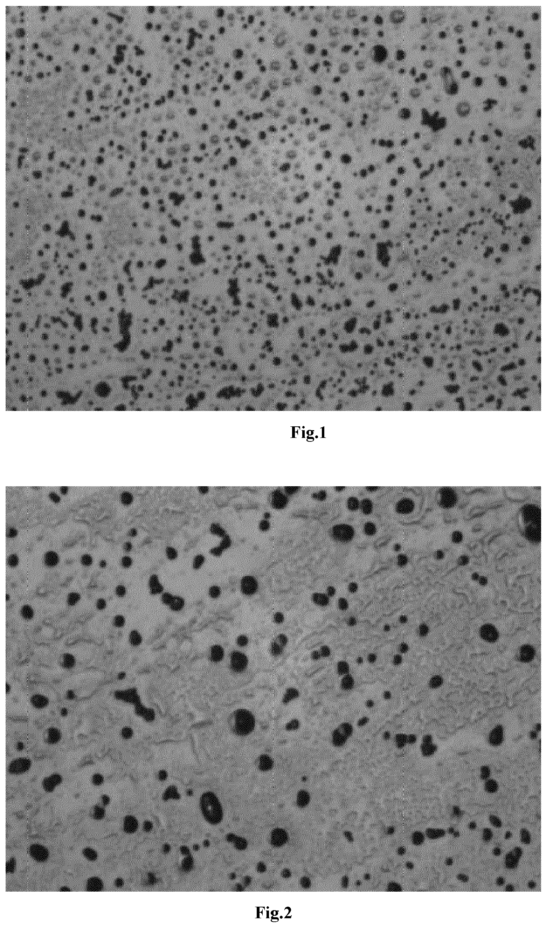

The microcrystalline cellulose particle products obtained above were observed under the optical microscope at 32 times and 63 times respectively. The results are shown in Figure 1 and Figure 2. It can be seen that the product has a unique particle shape, which is spherical or quasi-spherical particle.

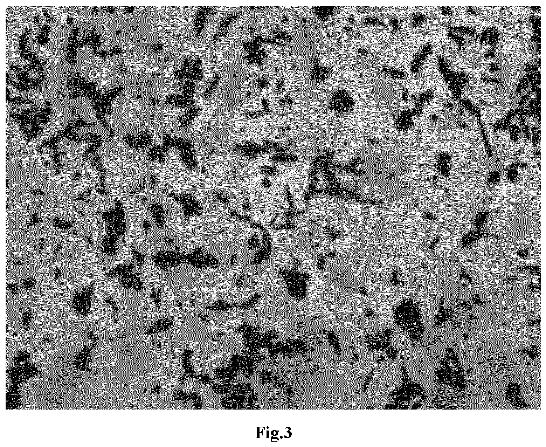

As a comparison, take the most representative AVICEL PH101 microcrystalline cellulose product on the market to observe the morphology under a 32x optical microscope. The result is shown in Figure 3, and it can be seen that it is in the form of a section of fiber.

### Example 2

Take commercially available Vivapur PH102 microcrystalline cellulose powder, its levelling off degree of polymerization is 225. Through particle size and density measurement, the loose density is 0.32g/ml, the tapped density is 0.44g/ml and the particle size distribution D10 is 29.623µm , D50 is 104.997 µm and D90 is 227.668 µm.

Weigh Vivapur PH102 microcrystalline cellulose powder 500g, add water 500g and mix to be 50% of the solid content of the material. The filter cake of this solid content is extruded 3 times by the high shear extrusion device and the torque of the extrusion device is controlled between 50-150 N•m. In the interlayer of the extruder, it is cooled by cooling water. The extruded material is diluted with water and stirred, neutralized to pH 5-8, and then spray-dried to obtain the microcrystalline cellulose product of the present invention.

Through particle size and density measurement, the microcrystalline cellulose product obtained above has a loose density of 0.598g/ml, a tapped density of 0.738g/ml, a particle size distribution D10 of 8.629 µm, D50 of 18.649 µm, and D90 of 36.61 µm.

### Example 3

Take the cellulose pulp obtained from bamboo on the market, and hydrolyze it with acid at high temperature (hydrolysis temperature 115-170°C, acid concentration 0.03-0.35mol/L) for 1-2 hours to obtain hydrolyzed microcrystalline cellulose, filter and wash with water to pH 4-5. The filter cake is diluted with water, neutralized to pH 5-8, and then spray-dried to obtain the traditional microcrystalline cellulose product. After measurement to the microcrystalline cellulose powder obtained, the loose density was 0.440 g/ml, the tapped density was 0.575 g/ml, and the particle size distribution D50 was 39.01 µm.

Take the bamboo pulp microcrystalline cellulose filter cake obtained above, control the solid content at 40%, extrude 3 times through a high shear extrusion device, and control the torque of the extrusion device between 50-150 N·m . In the interlayer of the extruder, cooling water is introduced for cooling. The extruded material is diluted with water and stirred, neutralized to pH 5-8, and then spray-dried to obtain the microcrystalline cellulose product of the present invention.

Through particle size and density determination, the microcrystalline cellulose product prepared above has a loose density of 0.624 g/ml, a tapped density of 0.811 g/ml, a particle size distribution of D10 of 5.613 µm, D50 of 12.221 µm, and D90 of 31.201 µm.

### Example 4

Take the cellulose pulp obtained from hemp fibers on the market, and undergo high-temperature acid hydrolysis (hydrolysis temperature 115-170°C, acid concentration 0.03-0.35mol/L) for 1-2 hours to obtain hydrolyzed microcrystalline cellulose. Wash with water to pH 4-5, dilute the filter cake with water, neutralize to pH 5-8, and then spray-dry to obtain the traditional microcrystalline cellulose product. After determination of the microcrystalline cellulose powder obtained, the loose density was 0.388 g/ml, the tapped density was 0.561 g/ml, and the particle size distribution D50 was 36.7 µm.

Take the hemp pulp microcrystalline cellulose filter cake obtained above, control the solid content at 40%, extrude it three times through a high-shear extrusion device, and control the torque of the extrusion device to be between 50-150 N·m . In the interlayer of the extruder, cooling water is passed into it for cooling. The extruded material is diluted with water and stirred, neutralized to pH 5-8, and then spray-dried to obtain the microcrystalline cellulose product of the present invention.

After particle size and density determination, the microcrystalline cellulose product prepared above has a loose density of 0.619 g/ml, a tapped density of 0.774 g/ml, a particle size distribution of D10 of 6.665 µm, D50 of 14.447 µm, and D90 of 30.297 µm.

### Example 5

Take the cellulose pulp obtained from wood on the market, undergo acid hydrolysis at high temperature (hydrolysis temperature 115-170 °C, acid concentration 0.03-0.35mol/L) for 1-2 hours to obtain hydrolyzed microcrystalline cellulose, filter and wash to pH to 4-5 and increase the solid content of the cake to 42%. The filter cake of this solid content is extruded 3 times through a high shear extrusion device (continuous extruder with high shear blades), and the torque of the extrusion device is controlled between 50-150 N·m. In the interlayer of the extruder, cooling water is introduced for cooling. The extruded material is diluted with water and stirred, neutralized to pH 5-8, and then spray-dried to obtain the microcrystalline cellulose product of the present invention.

After the measurement of particle size, density and angle of repose, the microcrystalline cellulose particles obtained above have a loose density of 0.600 g/ml, a tapped density of 0.730 g/ml, and a particle size distribution of D10 of 8.773 µm, D50 of 21.459 µm, D90 of 48.528µm, and the angle of repose of 30.5°.

### Comparative Example

Take the cellulose pulp obtained from wood on the market, undergo acid hydrolysis at high temperature (hydrolysis temperature 115-170 °C, acid concentration 0.03-0.35mol/L) for 1-2 hours to obtain hydrolyzed microcrystalline cellulose, filter and wash to pH to 4-5 and increase the cake the solid content to 35%. The filter cake of this solid content is extruded 3 times through a high shear extrusion device (continuous extruder with a high shear blade), and the torque of the extrusion device is controlled between 14-20 N·m during the extrusion process. The torque will gradually increase with the volatilization of water during the extrusion process, and the torque will be kept below 20 N·m by adding an appropriate amount of water. In the interlayer of the extruder, cooling water is introduced for cooling. The extruded material is diluted with water and stirred, neutralized to pH 5-8, and then spray-dried to obtain the microcrystalline cellulose product of the present invention.

Through particle size and density measurement, the obtained microcrystalline cellulose particle has a loose density of 0.487g/ml, a tapped density of 0.574g/ml and a particle size distribution D10 of 11.598µm, D50 of 37.001µm and D90 of 87.476 µm.

## Claims

1. A method of preparing microcrystalline cellulose particles, wherein the microcrystalline cellulose particle has an average particle size D50 of 1-25 µm, and loose density of 0.50-0.80 g/ml, **characterized in** comprising the step of mechanical action on ordinary microcrystalline cellulose by high shear force of a high shear force device, and the solid content of the ordinary microcrystalline cellulose is 15%-60% in the high shear mechanical action, wherein the said high shear mechanical action is a high shear force device selected from screw extruder, a screw kneader or a screw extrusion kneader, with a torque controlled among 50-150 N·m, and the said ordinary microcrystalline cellulose is the microcrystalline cellulose product with average particle size D50 above 25 µm and/or loose density below 0.50 g/ml; the average particle size D50 and loose density being measured as specified in the description.

2. The method according to claim 1, wherein the microcrystalline cellulose particle has an average particle size D50 of 10-25 µm, and loose density of 0.55-0.75 g/ml.

3. The method according to claim 1 or 2, **characterized in that** the said ordinary microcrystalline cellulose is a semi-finished product of microcrystalline cellulose obtained from natural cellulose pulp by a hydrolysis method or an electron beam irradiation method, or an existing microcrystalline cellulose powder product.

4. The method according to claim 3, **characterized in that** the material sources of the said natural cellulose pulp include but are not limited to the following raw materials or pulps: wood pulp, hemp pulp, bamboo pulp, cotton, cotton linter, straw, reed, straw pulp, cane bagasse, algae or bacterial microorganisms.

5. The method according to claims 1-4, **characterized in that** further optionally comprises the steps of diluting, dispersing, drying, sieving and/or grinding on the material processed by the high shear force device to obtain the microcrystalline cellulose particles of the present invention.

## Patentansprüche

1. Verfahren zur Herstellung von mikrokristallinen Cellulosepartikeln, wobei die mikrokristallinen Cellulosepartikel eine durchschnittliche Partikelgröße D50 von 1-25 µm und eine Schüttdichte von 0,50-0,80 g/ml aufweisen, **dadurch gekennzeichnet, dass** es den Schritt der mechanischen Einwirkung auf gewöhnliche mikrokristalline Cellulose durch eine hohe Scherkraft einer Vorrichtung mit hoher Scherkraft umfasst, und der Feststoffgehalt der gewöhnlichen mikrokristallinen Cellulose bei der mechanischen Einwirkung mit hoher Scherkraft 15%-60% beträgt, wobei die mechanische Einwirkung mit hoher Scherkraft eine Vorrichtung mit hoher Scherkraft ist, die aus einem Schneckenextruder, einem Schneckenkneter oder einem Schneckenextrusionskneter ausgewählt ist, mit einem Drehmoment, das gesteuert wird unter 50-150 Nm, und die erwähnte gewöhnliche mikrokristalline Cellulose das mikrokristalline Celluloseprodukt mit einer durchschnittlichen Partikelgröße D50 über 25 µm und/oder einer Schüttdichte unter 0,50 g/ml ist; die durchschnittliche Partikelgröße D50 und die Schüttdichte wie in der Beschreibung angegeben gemessen werden.

2. Verfahren nach Anspruch 1, wobei die mikrokristalline Cellulosepartikel eine mittlere Partikelgröße D50 von 1,0-25 µm und eine Schüttdichte von 0,5-0,75 g/ml aufweisen.

3. Verfahren nach Anspruch 1 oder 2, **dadurch gekennzeichnet, dass** die gewöhnliche mikrokristalline Cellulose ein Halbfertigprodukt aus mikrokristalliner Cellulose ist, das durch ein Hydrolyseverfahren oder ein Elektronenstrahlbestrahlungsverfahren aus natürlichem Zellstoff gewonnen wird, oder ein bestehendes mikrokristallines Cellulosepulverprodukt ist.

4. Verfahren nach Anspruch 3, **dadurch gekennzeichnet, dass** die Materialquellen des natürlichen Zellstoffs die folgenden Rohstoffe oder Zellstoffe umfassen, jedoch nicht darauf beschränkt sind: Holzzellstoff, Hanfzellstoff, Bambuszellstoff, Baumwolle, Baumwoll-Linter, Stroh, Schilf, Strohzellstoff, Zuckerrohrbagasse, Algen oder bakterielle Mikroorganismen.

5. Verfahren nach den Ansprüchen 1 - 4 , **dadurch gekennzeichnet, dass** es gegebenenfalls zusätzlich die Schritte des Verdünnens, Dispergierens, Trocknens, Siebens und/oder Mahlens des durch die Vorrichtung mit hoher Scherkraft verarbeiteten Materials umfasst, um die mikrokristallinen Cellulosepartikel der vorliegenden Erfindung zu erhalten.

## Revendications

1. Procédé de préparation de particules de cellulose microcristalline, dans lequel la particule de cellulose microcristalline a une taille moyenne des particules D50 de 1 à 25 µm et une densité apparente de 0,50 à 0,80 g/ml, **caractérisé en ce qu'**il comprend l'étape d'action mécanique sur de la cellulose microcristalline ordinaire par une force de cisaillement élevée d'un dispositif à force de cisaillement élevée, et la teneur en solides de la cellulose microcristalline ordinaire est de 15 % à 60 % dans l'action mécanique à cisaillement élevé, ladite action mécanique à cisaillement élevé étant un dispositif à force de cisaillement élevée choisi parmi une extrudeuse à vis , un malaxeur à vis ou un malaxeur à extrusion de vis, avec un couple de torsion contrôlé entre 50 et 150 N·m, et ladite cellulose microcristalline ordinaire est le produit de cellulose microcristalline ayant une taille moyenne des particules D50 supérieure à 25 µm et/ou une densité apparente inférieure à 0,50 g/ml; la taille moyenne des particules D50 et la densité apparente étant mesurées comme indiqué dans la description.

2. Procédé selon la revendication 1, dans lequel la particule de cellulose microcristalline a une taille moyenne des particules D50 de 10 à 25 µm, et une densité apparente de 0,55 à 0,75 g/ml.

3. Procédé selon la revendication 1 ou 2, **caractérisé en ce que** ladite cellulose microcristalline ordinaire est un produit semi-fini de cellulose microcristalline obtenu à partir de pâte de cellulose naturelle par une méthode d'hydrolyse ou une méthode d'irradiation par faisceau d'électrons, ou un produit existant en poudre de cellulose microcristalline.

4. Procédé selon la revendication 3, **caractérisé en ce que** les sources matérielles de ladite pâte de cellulose naturelle comprennent, sans s'y limiter, les matières premières ou pâtes suivantes : pâte de bois, pâte de chanvre, pâte de bambou, coton, linter de coton, paille, roseau, pulpe de paille, bagasse de canne, algues ou micro-organismes bactériens.

5. Procédé selon les revendications 1 à 4, **caractérisé en ce qu'**il comprend en outre éventuellement les étapes de dilution, dispersion, séchage, tamisage et/ou broyage du matériau traité par le dispositif à force de cisaillement élevée pour obtenir les particules de cellulose microcristalline de la présente invention.
